# EUROPÄISCHE PATENTANMELDUNG

(11) **EP 1 158 259 A2**
(43) Veröffentlichungstag der Anmeldung: **28.11.2001**
(21) Anmeldenummer: 01109610.4
(22) Anmeldetag: 18.04.2001
(51) Int. Cl.: F28D 20/00

(54) **Schichtspeicher**

(30) Priorität: 22.05.2000 DE 10025318
(71) Anmelder: Hurler GmbH, 83623 Dietramszell (DE)
(72) Erfinder: Hurler, Kaspar, 83623 Dietramszell (DE)
(74) Vertreter: Schlimme, Wolfram, Dr.-Ing.

(57) **Zusammenfassung**

Ein Schichtspeicher für eine Heizanlage oder einer Warmwasserbereitungsanlage mit zumindest einem Verbraucherkreislauf und/oder zumindest einem Heizkreislauf, wobei der Verbraucherkreislauf und/oder der Heizkreislauf eine Zuführleitung aufweist, die mit dem Schichtspeicher in Fluidverbindung steht, und wobei im Inneren des Schichtspeichers ein mit in unterschiedlichen Höhen gelegenen ventillosen Austrittsöffnungen versehenes Füllrohr vorgesehen ist, das mit der Zuführleitung in Fluidverbindung steht oder bringbar ist, zeichnet sich dadurch aus, daß im Inneren des Schichtspeichers ein Primärsteigrohr (36) und zumindest ein Zusatzsteigrohr (38, 40) als Füllrohre vorgesehen sind, die im wesentlichen gleich ausgebildet sind, und daß das Primärsteigrohr (36) und das Zusatzsteigrohr (38, 49) gemeinsam von einem im unteren Bereich des Schichtspeichers (1) angeordneten und mit der Zuführleitung (30) verbundenen Verteilrohr (34) ausgehen und mit diesem in Fluidverbindung stehen.

## Beschreibung

Die Erfindung betrifft einen Schichtspeicher für eine Heizanlage oder eine Warmwasserbereitungsanlage nach dem Oberbegriff des Patentanspruchs 1.

Schichtspeicher sind allgemein bekannt. So offenbart beispielsweise die DE 197 31 351 A1 einen Schichtspeicher für eine Warmwasserbereitungsanlage gemäß dem Oberbegriff des Patentanspruchs 1. Ein ähnlicher Schichtspeicher mit hängendem Füllrohr ist aus der DE 27 22 888 A1 bekannt. Die DE 196 12 191 A1 offenbart eine Heizanlage mit einem Schichtspeicher, bei dem jedoch die Austrittsöffnungen des Füllrohres mit Klappenventilen versehen sind.

Die Problematik bei Schichtspeichern sowohl für Heizanlagen als auch für Warmwasserbereitungsanlagen besteht darin, daß beim Einleiten von Wasser in den Schichtspeicher stets die Gefahr besteht, daß die thermische Schichtung in dem im Schichtspeicher vorhandenen Wasser durch Strömungsturbulenzen gestört wird und so Wasser aus unterschiedlichen Schichtungen gemischt wird, sodaß die vor dem Einleiten des Wassers vorhandene Temperaturschichtung zerstört wird.

Die bekannten Schichtspeicher arbeiten lediglich in einem engen Bereich des durch das Füllrohr zugeführten Wasser-Volumenstroms optimal. Wird dieser Volumenstrombereich überschritten, so kommt es auch bei diesen bekannten Schichtspeichern zu den unerwünschten Durchmischungen. Die bekannten Schichtspeicher sind daher lediglich für einen mehr oder minder statischen Anwendungsfall mit gleichbleibendem Rücklauf-Volumenstrom einsetzbar.

Aufgabe der vorliegenden Erfindung ist es, einen gattungsgemäßen Schichtspeicher für eine Heizanlage oder eine Warmwasserbereitungsanlage so auszubilden, daß auch über einen größeren Volumenstrom-Bereich des rückgeführten Wassers keine Durchmischung der thermischen Schichtung innerhalb des Schichtspeichers auftritt.

Diese Aufgabe wird bei einem Schichtspeicher gemäß dem Oberbegriff des Anspruchs 1 dadurch gelöst, daß im Inneren des Schichtspeichers ein Primärsteigrohr und zumindest ein Zusatzsteigrohr als Füllrohre vorgesehen sind, die im wesentlichen gleich ausgebildet sind, und daß das Primärsteigrohr und das Zusatzsteigrohr gemeinsam von einem im unteren Bereich des Schichtspeichers angeordneten und mit der Zuführleitung verbundenen Verteilrohr ausgehen und mit diesem in Fluidverbindung stehen.

Durch das Vorsehen von einem oder mehreren Zusatzsteigrohren zusätzlich zum Primärsteigrohr können mit dem erfindungsgemäßen Schichtspeicher unterschiedliche Volumenströme in der Zuführleitung verarbeitet werden, da dann, wenn die Durchflusskapazität im Primärsteigrohr erreicht ist, automatisch das erste Zusatzsteigrohr zum Einleiten des Rücklaufwassers in die entsprechende thermische Schicht mit hinzugezogen wird. Wenn der Volumenstrom so groß ist, daß er die Kapazität des Primärsteigrohrs und des ersten Zusatzsteigrohrs überschreitet, wird automatisch das nächstfolgende Zusatzsteigrohr mit Rücklaufwasser beschickt usw..

Besonders vorteilhaft ist es, wenn jedes Steigrohr eine Mehrzahl von vertikal voneinander beabstandeten Gruppen von Austrittsöffnungen aufweist. Dadurch daß bei dieser Ausgestaltungsform mehrere Austrittsöffnungen im Steigrohr für jede Temperaturschicht vorgesehen sind, erfolgt die Ausströmung des rückgeführten Wassers mit verhältnismäßig niedriger Strömungsgeschwindigkeit, sodaß das Risiko einer auströmungsbedingten Verwirbelung und damit Durchmischung der entsprechenden Temperaturschichten reduziert ist.

Weist jede Gruppe von Austrittsöffnungen eine Mehrzahl von Austrittsöffnungen auf, deren gesamte Querschnittsfläche gleich oder größer ist als die Querschnittsfläche des Fluidkanals im Inneren des zugehörigen Steigrohrs, so ist zuverlässig gewährleistet, daß die Strömungsgeschwindigkeit des rückgeführten Wassers beim Austritt aus den Austrittsöffnungen nicht höher ist als die Strömungsgeschwindigkeit innerhalb des Steigrohrs, wodurch ein sanfter, verwirbelungsfreier Austritt des rückgeführten Wassers gewährleistet wird.

Vorteilhaft ist es, wenn das Verteilrohr im Inneren des Schichtspeichers bogenförmig ausgebildet ist. Diese bogenförmige Ausbildung erzeugt einen geringen Strömungswiderstand innerhalb des Verteilrohrs, sodaß das rückgeführte Wasser zunächst bestrebt ist, im ersten Steigrohr, also im Primärsteigrohr, bis zur entsprechenden Temperaturschicht aufzusteigen und dort auszutreten. Erst wenn der Volumenstrom des rückgeführten Wassers und damit der dynamische Strömungsdruck im Verteilrohr größer ist als der Volumenstrom, der vom Primärsteigrohr aufgenommen werden kann, wird der durch das gekrümmte Verteilrohr erzeugte Strömungswiderstand überwunden und das überschüssige rückgeführte Wasser steigt in dem dem Primärsteigrohr nachgeordneten Zusatzsteigrohr auf.

In einer besonders vorteilhaften Weiterbildung weisen das Verteilrohr und die Steigrohre ein thermisch schlecht leitendes Material auf oder sind daraus gebildet. Hierdurch erhalten das Verteilrohr und die Steigrohre wärmeisolierende Eigenschaften, die verhindern, daß durch das in kälteren Schichtungen verlegte Verteilrohr und die kältere Schichten durchdringenden Steigrohre eine Abkühlung des wärmeren rückgeführten Wassers erfolgt. Ebenso wird hierdurch eine Erwärmung der kälteren Schichtungen um das Verteilrohr und die Steigrohre herum und damit eine erwärmungsbedingte Konvektionsströmung vermieden, die ansonsten eine Durchmischung der Schichten bewirken würde.

Vorzugsweise ist vor dem Verteilrohr eine Vorrichtung zur Strömungsberuhigung vorgesehen, die mit der Zuführleitung verbunden ist. Diese Vorrichtung zur Strömungsberuhigung verbessert das Fliessverhalten innerhalb des Verteilrohrs und erleichtert das konsekutive Aufsteigen des rückgeführten Wassers der Reihe nach in den hintereinander gelegenen Steigrohren.

In einer bevorzugten Ausführungsform weist die Vorrichtung zur Strömungsberuhigung ein vorzugsweise kugelförmiges Gehäuse auf, welches mit einem Auslaß versehen ist, der mit dem Verteilrohr in Fluidverbindung steht, und welches einen Einlaß aufweist, die mit der Zuführleitung in Fluidverbindung steht, und wobei der Einlaß im Inneren des Gehäuses eine von kammartigen Schlitzen gebildete Mündungsöffnung aufweist.

Vorzugsweise ist dabei die von kammartigen Schlitzen gebildete Mündungöffnung nach unten in Wirkrichtung der Schwerkraft gerichtet. Hierdurch wird vermieden, daß bei Einleitung von wärmerem Wasser durch die Mündungsöffnung in das Gehäuse eine Temperaturschichtung innerhalb des Gehäuses entsteht. Auf diese Weise wird innerhalb des Gehäuses der Vorrichtung zur Strömungsberuhigung eine schnelle Durchmischung des zugeführten wärmeren Wassers mit eventuell in der Vorrichtung vorhandenem kälteren Wasser erreicht.

In einer bevorzugten Ausführungsform entspricht der Innendurchmesser des kugelförmig ausgebildeten Gehäuses der Vorrichtung zur Strömungsberuhigung dem doppelten Innendurchmesser des Verteilrohres. Hierdurch wird eine besonders gleichmäßige Strömung im Verteilrohr erzielt.

Vorzugsweise entspricht die freie Austrittsquerschnittsfläche der von den kammartigen Schlitzen gebildeten Mündungsöffnung mindestens der Summe der Querschnittsflächen der Fluidkanäle im Inneren der jeweiligen Steigrohre. Diese Dimensionierung sorgt ebenfalls für eine möglichst homogene Strömung innerhalb des gesamten Zulaufs für den Schichtspeicher.

Die Erfindung wird nachfolgend anhand eines Beispiels unter Bezugnahme auf die Zeichnung näher erläutert; in dieser zeigt:
- **Fig. 1.**: einen erfindungsgemäßen Schichtspeicher und
- **Fig. 2.**: eine vergrößerte Schnittansicht durch einen erfindungsgemäßen Schichtspeicher entlang der Linie II-II in Fig. 1.

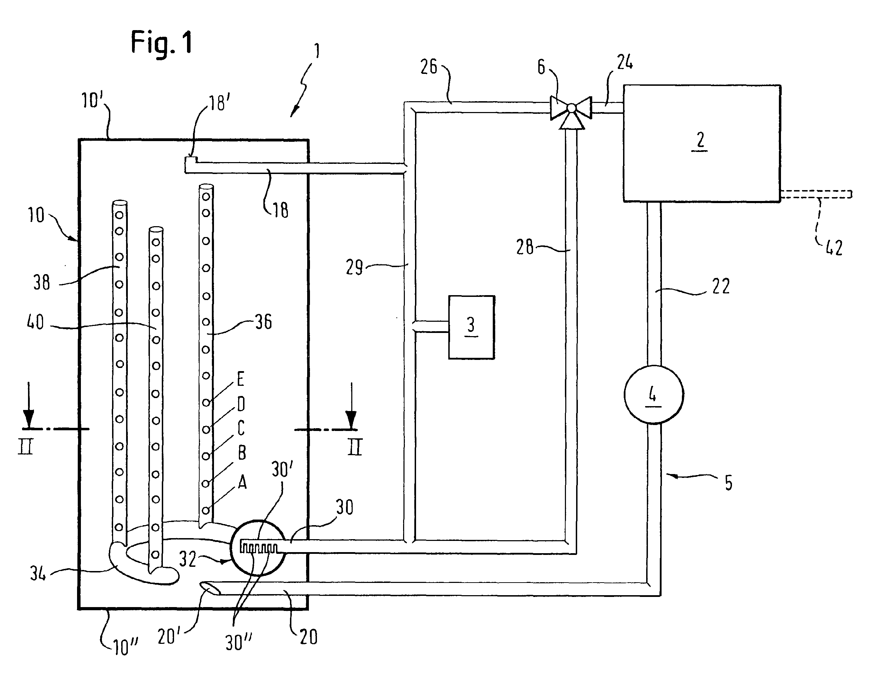

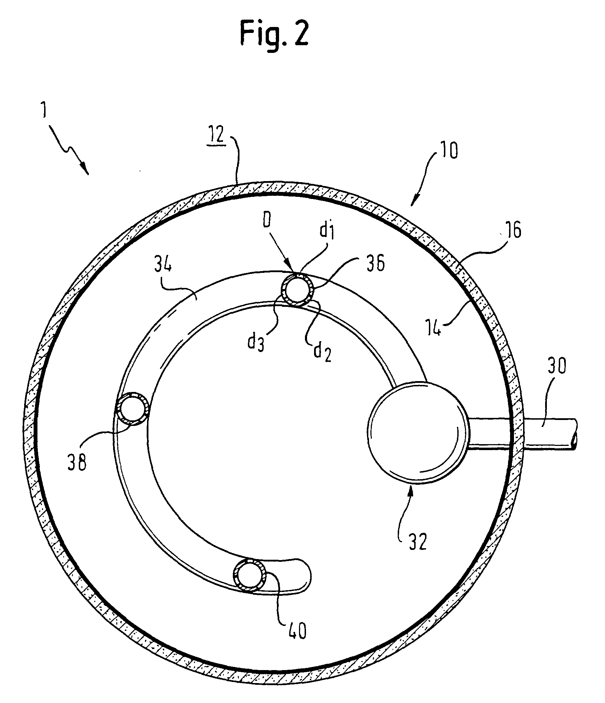

In Fig. 1 ist ein Heizkreislauf mit einem erfindungsgemäßen Schichtspeicher 1 schematisch dargestellt. Der Schichtspeicher 1 besitzt ein kesselartiges Gehäuse 10 das zur Aufnahme eines Wasservorrates abgedichtet ausgebildet ist. Das kesselartige Gehäuse 10 besitzt eine Wandung 12, die aus einem Mantel 14 und einer auf der Außenseite des Mantels 14 angebrachten Wärmeisolierschicht 16 besteht (Fig. 2).

Der Schichtspeicher 1 weist in seinem oberen Bereich eine Warmwasserleitung 18 und in seinem unteren Bereich eine Kaltwasserleitung 20 auf. Die Warmwasserleitung 18 ist an ihrem in den Schichtspeicher 1 hineinragenden freien Ende nach oben abgewinkelt, sodaß die Öffnung 18' der Warmwasserleitung nach oben zur Innenseite des oberen Deckels 10' des Schichtspeichers 1 weist. Die Kaltwasserleitung 20 ist an ihrem in den Schichtspeicher 1 hineinragenden freien Ende abgeschrägt, sodaß die Öffnung 20' der Kaltwasserleitung schräg nach unten zum Boden 10" des Schichtspeichers 1 weist.

In Fig. 1 ist der Schichtspeicher 1 in einen Heizkreislauf integriert dargestellt. Der Heizkreislauf umfaßt außer dem Schichtspeicher 1 noch eine in Fig. 1 schematisch dargestellte Heizeinrichtung 2, eine Mehrzahl von Verbrauchern, die in Fig. 1 lediglich schematisch durch einen Verbraucher 3 gezeigt sind, eine Umwälzpumpe 4 und ein Leitungssystem 5, das die einzelnen Elemente des Heizkreislaufs, wie nachfolgend noch dargestellt wird, miteinander verbindet.

Die Heizeinrichtung 2 kann von einem beliebigen Wärmeerzeuger gebildet sein, beispielhaft seien hier Solaranlagen, Wärmepumpen, Holzheizungsanlagen, Gas-oder Ölfeuerungsanlagen genannt. Selbstverständlich kann die Heizeinrichtung 2 auch aus einer Kombination derartiger Anlagen bestehen.

Die Verbraucher 3 können ebenfalls von beliebigen Wärmetauschern gebildet sein, beispielhaft seien hier Konvektoren, Lufterhitzer, Wandheizungen und Fußbodenheizungen genannt.

Die Kaltwasserleitung 20 ist mit einem Eingang der Umwälzpumpe 4 verbunden, deren Ausgang über eine erste Verbindungsleitung 22 mit einem Kaltwassereingang der Heizeinrichtung 2 verbunden ist. Ein Warmwasserausgang der Heizeinrichtung 2 ist über eine zweite Verbindungsleitung 24 mit einem als Umschaltventil wirkenden Drei-Wege-Ventil 6 verbunden.

Ein erster Ausgang des Drei-Wege-Ventils 6 ist über eine dritte Verbindungsleitung 26 mit der Warmwasserleitung 18 verbunden. Bei voller Heizleistung der Heizeinrichtung 2, beispielsweise dann, wenn eine Gas-oder Ölfeuerungsanlage oder eine Holzheizungsanlage eingeschaltet ist, wird das von der Umwälzpumpe 4 aus dem unterem Bereich des Schichtspeichers 1 geförderte Kaltwasser auf die Maximaltemperatur erhitzt und in den oberen Bereich des Schichtspeichers 1 durch die in diesem Fall als Warmwasser-Zuführleitung wirkende Warmwasserleitung 18 eingeleitet.

Ein zweiter Ausgang des Drei-Wege-Ventils 6 ist über eine vierte Verbindungsleitung 28 mit einer Zuführleitung 30 verbunden, die im unteren Bereich des Schichtspeichers 1 in diesen hineinführt. Die Zuführleitung 30 kann auch mit einer Vorlaufleitung des Heizkreislaufs verbunden sein. Das in den Schichtspeicher 1 hinführende freie Ende der Zuführleitung 30 mündet in eine kugelförmige Vorrichtung 32 zur Strömungsberuhigung, die im unteren Bereich des Schichtspeichers 1 vorgesehen ist und die einen Ausgang aufweist, der mit einem gekrümmten oder teilkreisförmigen Verteilrohr 34 verbunden ist, welches im unteren Abschnitt des Schichtspeichers 1 im wesentlichen horizontal angeordnet ist.

Ausgehend von dem Verteilrohr 34 erstrecken sich drei Steigrohre 36, 38, 40 innerhalb des Schichtspeichers 1 im wesentlichen vertikal nach oben. Die Steigrohre 36, 38, 40 stehen mit dem Inneren des Verteilrohres 34 in Fluidverbindung und sind an ihrem oberen freien Ende geschlossen. Der Vorrichtung 32 zur Strömungsberuhigung am nächsten gelegen ist das Primärsteigrohr 36, während ein erstes Zusatzsteigrohr 38 von der Vorrichtung 32 zur Strömungsberuhigung weiter abgewandt ist und das zweite Zusatzsteigrohr 40 noch weiter von der Vorrichtung 32 zur Strömungsberuhigung entfernt angeordnet ist. Jedes der Steigrohre ist über seine Länge, das heißt über seine vertikale Erstreckung, mit einer Vielzahl von Austrittsöffnungen versehen. Da die Steigrohre 36, 38, 40 im wesentlichen identisch ausgebildet sind, wird deren Aufbau nachfolgend lediglich anhand des Primärsteigrohrs 36 beschrieben. Zwar weisen die Steigrohre 36, 38, 40 im beschriebenen Beispiel den gleichen Innendurchmesser auf, doch ist es grundsätzlich auch möglich, daß die einzelnen Steigrohre unterschiedliche Querschnitte besitzen.

Das Primärsteigrohr 36 ist über seine gesamte Längserstreckung vom unteren, mit dem Verteilrohr 34 verbunden Ende bis zum im obersten Bereich des Schichtspeichers 1 gelegenen freien geschlossenen Ende mit voneinander beabstandet angeordneten Gruppen A, B, C, D, E, ... von Austrittsöffnungen versehen. Der vertikale Abstand dieser Gruppen ist zum Beispiel so bemessen, daß er einem vorgegebenen Temperaturunterschied, beispielsweise 5°C, in der thermischen Schichtung des Wassers innerhalb des Schichtspeichers 1 entspricht. Geht man davon aus, daß die unterste Kaltwasserschicht im Schichtspeicher 1 eine Temperatur von T₁ = 15°C aufweist, so befinden sich die Austrittsöffnungen A für die erste darübergelegenen Temperaturschichtung dort, wo das Wasser im Schichtspeicher eine Temperatur T₂ = 20°C aufweist. Demzufolge liegen die Austrittsöffnungen B bei T₃ = 25°C, die Austrittsöffnungen C bei T₄ = 30°C, die Austrittsöffnungen D bei T₅ = 35°C, die Austrittsöffnungen E bei T₆ = 40°C usw..

In Fig. 2 ist zu erkennen, daß die in der Schnittansicht des Primärsteigrohrs 36 gezeigte Gruppe D der Austrittsöffnungen drei über den Umfang des Primärsteigrohrs 36 verteilte Austrittsöffnungen d₁, d₂ und d₃ aufweist. Die Gruppen von Austrittsöffnungen aller Steigrohre sind auf diese Weise von jeweils einer Mehrzahl von Austrittsöffnungen gebildet.

Die Verbraucher 3 sind an eine Verbrauchervorlaufleitung 29 angeschlossen, die die Warmwasserleitung 18 mit der Zuführleitung 30 verbindet. Auf diese Weise wird Warmwasser aus der obersten Schichtung des Schichtspeichers 1 durch die Warmwasserleitung 18 zu den Verbrauchern 3 geleitet, wo dem Wasser Wärme entzogen wird, sodaß dieses abgekühlt zur Zuführleitung 30 fließt. Dieses abgekühlte Wasser besitzt im allgemeinen eine Temperatur, die zwischen der kältesten Temperatur des Wassers im untersten Bereich des Schichtspeichers 1 und der wärmsten Temperatur des obersten Bereichs des Schichtspeichers 1 liegt.

Dieses rückgeführte abgekühlte Wasser tritt durch die Zuführleitung 30 in die Vorrichtung 32 zur Strömungsberuhigung ein, wozu das freie Ende 30' der Zuführleitung 30 innerhalb der Vorrichtung 32 zur Strömungsberuhigung mit vertikal nach unten weisenden kammartigen Schlitzen 30" versehen ist, durch die das rückgeführte Wasser austreten kann. Aus der Vorrichtung 32 zur Strömungsberuhigung fließt das rückgeführte abgekühlte Wasser in das Verteilrohr 34 und von dort zunächst im Primästeigrohr 36 nach oben bis zu der Gruppe von Austrittsöffnungen im Bereich jener Temperaturschicht, die der Temperatur des rückgeführten abgekühlten Wassers entspricht und tritt durch diese Gruppe von Austrittsöffnungen in die zugeordnete Temperaturschicht aus.

Ein Austreten des rückgeführten Wassers aus den daruntergelegenen Austrittsöffnungen wird dadurch verhindert, daß die den daruntergelegenen Gruppen von Austrittsöffnungen zugeordneten Temperaturschichtungen Wasser von höherer Dichte aufweisen, wodurch im Bereich der daruntergelegenen Austrittsöffnungen eine Sperrwirkung entsteht, die eine Austreten des rückgeführten Wassers höherer Temperatur aus diesen Öffnungen verhindert.

Erfolgt in der Heizeinrichtung 2 keine vollständige Aufheizung des Wassers im Heizkreislauf bis zur Maximaltemperatur, was beispielsweise bei Solaranlagen oder Wärmepumpen der Fall sein kann, so wird das Drei-Wege-Ventil 6 umgeschaltet. Dadurch wird das nur teilweise aufgeheizte Wasser in die vierte Verbindungsleitung 28 und von dieser in die Zuführleitung 30 geleitet, aus der es durch die Vorrichtung 32 zur Strömungsberuhigung, das Verteilrohr 34 und das Primärsteigrohr 36, wie vorstehend ausgeführt, bis in die Temperaturschichtung aufsteigt, die der Temperatur des teilweise aufgeheizten Wassers entspricht. Dort tritt es aus den Austrittsöffnungen aus.

Ist der Wasservolumenstrom, beispielsweise durch Einschalten der Umwälzpumpe 4, höher als ein vorgegebener Auslegungsvolumenstrom für das Primärsteigrohr, so wird ein Teil des durch die Zuführleitung 30 in das Verteilrohr 34 eingeleiteten Wassers innerhalb des Verteilrohrs 34 zum ersten und bei Bedarf auch zum zweiten Zusatzsteigrohr weitergeleitet und steigt dort ebenfalls, wie vorstehend in Verbindung mit dem Primärsteigrohr beschrieben, bis zu jener Temperaturschicht auf, die der Temperatur des teilweise erwärmten Wassers entspricht, und tritt dort aus.

Die Auslegung des erfindungsgemäßen Schichtspeichers erfolgt derart, daß der Volumenstrom in den jeweiligen Steigrohren nicht größer ist als 38 und im Verteilrohr nicht größer ist als 56 . Durch die Wahl dieser maximalen Volumenströme bezogen auf den freien Querschnitt im jeweiligen Steigrohr beziehungsweise im Verteilrohr wird eine unerwünschte Injektorwirkung in der Rohrströmung vermieden.

Zwar ist in Fig. 1 ein Heizkreislauf gezeigt, doch ist der erfindungsgemäße Schichtspeicher 1 auch in einem Warmwasserbereitungskreislauf einsetzbar, der sich vom Heizkreislauf dadurch unterscheidet, daß im Verbraucher 3 Wasser aus dem Kreislauf austritt, für das an anderer Stelle, beispielsweise durch den in Fig. 1 gestrichelt gezeichneten Wasserzulauf 42, wieder Frischwasser zugeführt wird.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Schichtspeicher für eine Heizanlage oder eine Warmwasserbereitungsanlage mit zumindest einem Verbraucherkreislauf und/oder zumindest einem Heizkreislauf,
- wobei der Verbraucherkreislauf und/oder der Heizkreislauf eine Zuführleitung aufweist, die mit dem Schichtspeicher in Fluidverbindung steht, und
- wobei im Inneren des Schichtspeichers ein mit in unterschiedlichen Höhen gelegenen ventillosen Austrittsöffnungen versehenes Füllrohr vorgesehen ist, das mit der Zuführleitung in Fluidverbindung steht oder bringbar ist,
**dadurch gekennzeichnet,**
- **daß** im Inneren des Schichtspeichers (1) ein Primärsteigrohr (36) und zumindest ein Zusatzsteigrohr (38, 40) als Füllrohre vorgesehen sind, die im wesentlichen gleich ausgebildet sind, und
- **daß** das Primärsteigrohr (36) und das Zusatzsteigrohr (38, 40) gemeinsam von einem im unteren Bereich des Schichtspeichers (1) angeordneten und mit der Zuführleitung (30) verbundenen Verteilrohr (34) ausgehen und mit diesem in Fluidverbindung stehen.

2. Schichtspeicher nach Anspruch 1,
**dadurch gekennzeichnet,**
**daß** jedes Steigrohr (36, 38, 40) eine Mehrzahl von vertikal voneinander beabstandeten
Gruppen (A, B, C, D, E, ...) von Austrittsöffnungen aufweist.

3. Schichtspeicher nach Anspruch 2,
**dadurch gekennzeichnet,**
**daß** jede Gruppe (A, B, C, D, E...) von Austrittsöffnungen eine Mehrzahl von Austrittsöffnungen aufweist, deren gesamte Querschnittsfläche gleich oder größer ist als die Querschnittsfläche des Fluidkanals im Inneren des zugehörigen Steigrohrs (36, 38, 40).

4. Schichtspeicher nach einem der vorhergehenden Ansprüche,
**dadurch gekennzeichnet,**
**daß** das Verteilrohr (34) im Inneren des
Schichtspeichers (1) bogenförmig ausgebildet ist.

5. Schichtspeicher nach einem der vorhergehenden Ansprüche,
**dadurch gekennzeichnet,**
**daß** das Verteilrohr (34) und die Steigrohre (36, 38, 40) ein thermisch schlecht leitendes Material aufweisen oder daraus gebildet sind.

6. Schichtspeicher nach einem der vorhergehenden Ansprüche,
**dadurch gekennzeichnet,**
**daß** vor dem Verteilrohr (34) eine Vorrichtung (32) zur Strömungsberuhigung vorgesehen ist, die mit der Zuführleitung (30) verbunden ist.

7. Schichtspeicher nach Anspruch 6,
**dadurch gekennzeichnet,**
**daß** die Vorrichtung (32) zur Strömungsberuhigung ein vorzugsweise kugelförmiges Gehäuse aufweist, welches mit einem Auslaß versehen ist, der mit dem Verteilrohr (34) in Fluidverbindung steht, und welches einen Einlaß (30') aufweist, der mit der Zuführleitung (30) in Fluidverbindung steht, und
**daß** der Einlaß (30') im Inneren des Gehäuses eine von kammartigen Schlitzen (30'') gebildete Mündungsöffnung aufweist.

8. Schichtspeicher nach Anspruch 7,
**dadurch gekennzeichnet ,**
**daß** die von kammartigen Schlitzen (30'') gebildete Mündungsöffnung nach unten in Wirkrichtung der Schwerkraft gerichtet ist.

9. Schichtspeicher nach Anspruch 7 oder 8,
**dadurch gekennzeichnet ,**
**daß** der Innendurchmesser des kugelförmig ausgebildeten Gehäuses der Vorrichtung (32) zur Strömungsberuhigung dem doppelten Innendurchmesser des Verteilrohres (34) entspricht.

10. Schichtspeicher nach Anspruch 7, 8 oder 9,
**dadurch gekennzeichnet,**
**daß** die freie Austrittsquerschnittsfläche der von den kammartigen Schlitzen (30'') gebildeten Mündungsöffnung mindestens der Summe der Querschnittsflächen der Fluidkanäle im Inneren der jeweiligen
Steigrohre (36, 38, 40) entspricht.
